# EUROPÄISCHE PATENTSCHRIFT

(11) **EP 3 636 373 B1**
(45) Veröffentlichungstag und Bekanntmachung des Hinweises auf die Patenterteilung: **23.12.2020**
(21) Anmeldenummer: 19200687.2
(22) Anmeldetag: 01.10.2019
(51) Int. Cl.: B23F 21/22, B23Q 17/09, B23Q 17/00, B23Q 17/12

(54) **VERFAHREN UND VORRICHTUNG ZUR KONTROLLE EINER STABMESSEREINSPANNUNG UND/ODER EINES MESSERSCHACHTS EINES STABMESSERKOPFS ZUR KEGELRADHERSTELLUNG**
METHOD AND DEVICE FOR CONTROLLING A BLADE RESTRAINT AND/OR A BLADE SHAFT OF A BLADE HEAD FOR BEVEL GEAR MANUFACTURING
PROCÉDÉ ET DISPOSITIF DE VÉRIFICATION D'UN SERRAGE DE LAME À BARRE ET / OU D'UN LOGEMENT DE LAME D'UNE TÊTE DE LAME À BARRE DESTINÉE À LA FABRICATION D'UNE ROUE CONIQUE

(30) Priorität: 11.10.2018 DE 102018125135
(43) Veröffentlichungstag der Anmeldung: 15.04.2020
(73) Patentinhaber: Klingelnberg AG, 8050 Zürich (CH)
(72) Erfinder: Daniels, Matthias, 51429 Bergisch Gladbach (DE)
(74) Vertreter: Janke Scholl Patentanwälte PartG mbB

(56) Entgegenhaltungen:
- EP-A1- 2 815 837
- DE-A1-102007 036 002
- DE-A1-102014 105 714
- DE-A1-102016 122 657
- DE-U1- 20 014 122

## Beschreibung

Die vorliegende Erfindung betrifft ein Verfahren und eine Vorrichtung zur Kontrolle einer Stabmessereinspannung und/oder eines Messerschachts eines Stabmesserkopfs zur Kegelradherstellung. Das Dokument EP 2 815 837 A offenbart ein Verfahren zur Kontrolle einer Stabmessereinspannung und/oder eines Messerschachts eines Stabmesserkopfs zur Kegelradherstellung, mit den Verfahrensschritten: Bereitstellen eines Grundkörpers eines Stabmesserkopfs, wobei der Grundkörper Messerschächte zur Aufnahme von Stabmessern aufweist und in mindestens einem Messerschacht des Grundkörpers des Stabmesserkopfs ein Bauteil, wie ein Stabmesser, lösbar und austauschbar eingespannt ist, Messung der Verlagerung und/ oder Geschwindigkeit und/oder Beschleunigung des Bauteils, und Auswertung der Messung. Das Dokument offenbart ferner eine Vorrichtung zur Kontrolle einer Stabmessereinspannung und/oder eines Messerschachts eines Stabmesserkopfs, mit einer Messvorrichtung zur Messung der Verlagerung und/oder Geschwindigkeit und/oder Beschleunigung des Bauteils.

Stabmesserköpfe werden zur Herstellung von Kegelrädern eingesetzt. Ein Stabmesskopf besteht üblicherweise aus einem Grundkörper mit Stabmessern, wobei der Grundkörper Messerschächte mit Klemmvorrichtungen zum Einspannen der Stabmesser aufweist. Die Stabmesser dienen zur spanabhebenden Weichbearbeitung mit definierter Schneide und werden häufig als beschichtete Hartmetallstäbe bereitgestellt.

Die Stabmesser sind lösbar an dem Grundkörper des Messerkopfs gehalten und sind üblicherweise jeweils mithilfe eines beweglichen Klemmelements der Klemmvorrichtung in einem Messerschacht gegen Anlageflächen des Messerschachts verspannt. Das Klemmelement wird mit einer oder mehreren Schrauben verschoben, um den Messerschacht zum Einspannen des Stabmessers zu verengen. Es kann vorgesehen sein, dass eine oder mehrere Schrauben ein Stabmesser in direkter Anlage zum Stabmesserschaft in dem Messerschacht verspannen. Es kann vorgesehen sein, dass sogenannte Parallelplatten zwischen dem Stabmesser und einer den Messerschacht begrenzenden Wandung angeordnet sind, um die radiale Position eines jeweiligen Stabmessers einzustellen. Der zuverlässige Sitz eines jeweiligen Stabmessers in dem Grundkörper ist entscheidend für einen stabilen Fertigungsprozess und das Erreichen der geforderten Werkstückqualität.

Der Stabmessersitz eines Stabmessers in einem Messerschacht bzw. die Qualität der Einspannung eines Stabmessers in dem Messerschacht kann durch eine Vielzahl von Einflussfaktoren beeinträchtigt werden, wobei nachfolgend nur einige exemplarisch aufgelistet sind:
- Der Stabmesserkopf ist aufgrund einer Fehlbedienung einer Werkzeugmaschine mit einem weiteren Bauteil der Werkzeugmaschine oder einem darin aufgenommenen Werkstück kollidiert und dadurch inklusive der Messerschächte verformt worden.
- Die Fertigungstoleranzen einer Paarung aus Stabmesser und Messerschacht lassen keine zuverlässige Einspannung des Stabmessers zu.
- Die auskragende Länge des Stabmessers ist nicht korrekt eingestellt.
- Die Anlageflächen eines Messerschachts und/oder eines Stabmessers sind aufgrund von Verschleiß außerhalb der vorgesehenen Toleranz.
- Ein Gewinde einer Klemmschraube einer Klemmvorrichtung ist verschmutzt oder außerhalb der vorgegebenen Toleranz gefertigt.
- Das Drehmoment beim Verspannen eines jeweiligen Stabmessers ist nicht korrekt eingestellt worden.
- Die Beschichtung eines Stabmessers ist ungleichmäßig, so dass es zu einem teilweisen Einklemmen der Beschichtung in dem Messerschacht kommt.

Eine mangelhafte bzw. beeinträchtigte Einspannung eines Stabmessers in einem Messerschacht des Grundkörpers kann zu einem Bruch des Stabmessers, zu einem Vibrieren des Stabmessers, zu Spanaufschweißungen an der Spanfläche des Stabmessers und ähnlichen nachteiligen Effekten während des Fertigungsprozesses führen.

Ein Bruch des Stabmessers macht dieses in der Regel unbrauchbar für die weitere Verwendung. Das Vibrieren des Stabmessers kann zu Welligkeiten, zu ungenügender Topografie der Zahnflanken und ggf. zu sichtbaren Rattermarken an den gefertigten Zahnflanken führen, so dass das Werkstück ggf. nicht für die Hartfeinbearbeitung geeignet ist. Spanaufschweißungen im Bereich der Spanfläche eines Stabmessers können zu einem Verstopfen (Chip-Clogging) eines zwischen benachbarten Stabmessern vorgesehenen Zwischenraums führen, wobei das Aufstauen der Späne die Bearbeitungsqualität beeinträchtigt und wiederum zu einem Bruch oder zur Beschädigung des betreffenden Stabmessers führen kann.

Jedem dieser Fälle ist gemein, dass der Stabmesserkopf von der Werkzeugmaschine demontiert und teilweise oder vollständig neu bestückt werden muss. Neben den Kosten für die Instandsetzung des Stabmesserkopfs kann dies zudem zu kostenintensiven Ausfallzeiten in der Fertigung führen, soweit kein Ersatzwerkzeug bereitsteht.

Zusammenfassend bleibt festzuhalten, dass es eine Vielzahl von Einflussfaktoren gibt, die eine Stabmessereinspannung an einem Grundkörper eines Messerkopfs beeinträchtigen können, wobei die Folgen einer unzureichenden Einspannung eines oder mehrerer Stabmesser hohe Kosten nach sich ziehen können.

Vor diesem Hintergrund liegt der vorliegenden Erfindung die technische Problemstellung zugrunde ein Verfahren und eine Vorrichtung zur Kontrolle einer Stabmessereinspannung eines Stabmesserkopfs anzugeben. Die voranstehend beschriebene technische Problemstellung wird gelöst durch ein Verfahren nach Anspruch 1 und eine Vorrichtung nach Anspruch 11. Weitere Ausgestaltungen der Erfindung ergeben sich aus den abhängigen Ansprüchen und der nachstehenden Beschreibung.

Gemäß einem ersten Aspekt betrifft die Erfindung ein Verfahren zur Kontrolle einer Stabmessereinspannung und/oder eines Messerschachts eines Stabmesserkopfs zur Kegelradherstellung, mit den Verfahrensschritten: Bereitstellen eines Grundkörpers eines Stabmesserkopfs, wobei der Grundkörper Messerschächte zur Aufnahme von Stabmessern aufweist, und wobei in mindestens einem Messerschacht des Grundkörpers des Stabmesserkopfs ein Bauteil, wie ein Stabmesser, ein Prüfkörper oder dergleichen, lösbar und austauschbar eingespannt ist; Schwingungsanregung des Bauteils; Messung der Verlagerung und/oder Geschwindigkeit und/oder Beschleunigung des Bauteils; Auswertung der Messung.

Das Verfahren ermöglicht daher die Bewertung der Einspannung eines Bauteils, wie eines Stabmessers, eines Prüfkörper oder dergleichen, im fertig am Grundkörper des Stabmesserkopfs montierten Zustand, so dass, unabhängig davon, welche der eingangs genannten Einflussgrößen den Sitz des Bauteils beeinträchtigt, eine mangelhafte Einspannung des Bauteils in dem Messerschacht detektiert werden kann.

Soweit eines oder mehrere Stabmesser an dem Grundkörper des Stabmesserkopfs befestigt sind, kann der Stabmesserkopf zur spanabhebenden Werkstückbearbeitung zur Herstellung eines Kegelrads eingerichtet sein. Das Verfahren ermöglicht in diesem Fall die Überprüfung des Sitzes eines jeweiligen Stabmessers im zugeordneten Messerschacht. Das zur Kegelradfertigung vorgesehene Werkzeugsystem kann daher überprüft werden.

Soweit einer oder mehrere Prüfkörper an dem Grundkörper des Stabmesserkopfs befestigt sind, können die Fertigungsqualität und/oder der Verschleißzustand der Messerschächte des Grundkörpers des Stabmesserkopfs überprüft werden. So kann der Grundkörper des Messerkopfs insbesondere mithilfe eines standardisierten Prüfkörpers, der eine ebenfalls standardisierte Anlage zu einem Kontaktelement des Messsystems haben kann, überprüft werden.

Ergibt die Auswertung z.B. für ein am Grundkörper eingespanntes Stabmesser, dass eine gemessene Auslenkung und/oder Geschwindigkeit und/oder Beschleunigung des Stabmessers infolge der Schwingungsanregung eine vorgegebene, maximal zulässige Auslenkung und/oder Geschwindigkeit und/oder Beschleunigung übersteigt, wird der Sitz des betreffenden Stabmessers überprüft. Das Stabmesser kann ggf. erneut eingespannt werden, die im verspannten Zustand aneinander anliegenden Flächen des Stabmessers und des Messerschachts gereinigt werden, das Stabmesser und der Messerschacht vermessen oder andere Maßnahmen ergriffen werden, um die Ursache für die mangelhafte Einspannung zu erkennen und zu beseitigen. Entscheidend ist, dass die unzureichende Einspannung des betreffenden Stabmessers erkannt werden kann, bevor der Messerkopf für die Fertigung freigegeben wird und ggf. die einleitend beschriebenen Probleme verursacht.

Das voranstehend beschriebene Verfahren kann gleichermaßen an einem Stabmesserkopf durchgeführt werden, der in der Fertigung nicht die geforderte Bearbeitungsqualität erreicht hat, um die Ursache hierfür zu ergründen und Daten für baugleiche Stabmesserköpfe oder baugleiche Messerkopfgrundkörper zu sammeln.

Das voranstehend beschriebene Verfahren kann gleichermaßen an einem Stabmesserkopf durchgeführt werden, der in der Fertigung die geforderte Bearbeitungsqualität erreicht hat, um Referenzdaten für baugleiche Stabmesserköpfe oder baugleiche Messerkopfgrundkörper zu sammeln.

Ergibt die Auswertung z.B. für einen am Grundkörper eingespannten Prüfkörper, dass eine gemessene Auslenkung und/oder Geschwindigkeit und/oder Beschleunigung des Prüfkörpers infolge der Schwingungsanregung eine vorgegebene, maximal zulässige Auslenkung und/oder Geschwindigkeit und/oder Beschleunigung übersteigt, wird der Messerschacht, in dem der Prüfkörper sitzt, überprüft. Hierzu können wiederum z.B. ein Bestimmen von Fertigungsabweichungen und/oder Verschleißerscheinungen und/oder ein Reinigen erfolgen, um die Ursache für die mangelhafte Einspannung zu erkennen und zu beseitigen. Entscheidend ist, dass die unzureichende Qualität des betreffenden Messerschachts erkannt werden kann, bevor der Messerkopf für die Fertigung freigegeben wird.

Das voranstehend mithilfe des Prüfkörpers durchgeführte Verfahren kann gleichermaßen an einem Stabmesserkopf durchgeführt werden, der in der Fertigung nicht die geforderte Bearbeitungsqualität erreicht hat, um die Ursache hierfür zu ergründen.

Das voranstehend mithilfe des Prüfkörpers durchgeführte Verfahren mithilfe des Prüfkörpers kann gleichermaßen an einem Stabmesserkopf durchgeführt werden, der in der Fertigung die geforderte Bearbeitungsqualität erreicht hat, um Referenzdaten für baugleiche Stabmesserköpfe oder baugleiche Messerkopfgrundkörper zu sammeln.

Um einen einfachen und reproduzierbaren Messaufbau zu erreichen ist nach einer weiteren Ausgestaltung des Verfahrens vorgesehen, dass das Bereitstellen des Grundkörpers folgenden Schritt aufweist: Auflegen des Grundkörpers des Stabmesserkopfs auf eine horizontal orientierte Planebene. Der zu prüfende Grundkörper liegt daher flach auf einer Planebene auf, so dass das Messergebnis nicht durch eine Verformung des Grundkörpers unter Eigengewicht beeinträchtigt wird.

Gemäß alternativer Ausgestaltungen kann vorgesehen sein, dass ein jeweilige Grundkörper des Stabmesserkopfs entsprechend seiner Orientierung innerhalb einer Werkzeugmaschine an einem Prüfaufbau aufgenommen ist, um den Einbauzustand an einer Werkzeugmaschine möglichst realitätsnah abzubilden.

Weiter kann vorgesehen sein, dass der Grundkörper des Stabmesserkopfs oder der vollständig mit Stabmessern bestückte Grundkörper im fertig an einer Werkzeugmaschine montierten Zustand mithilfe des erfindungsgemäßen Verfahrens überprüft wird. So können z.B. einzelne Messerschächte oder Stabmesser als Ursache für Rattermarken oder Welligkeiten auf den Zahnflanken identifiziert und ggf. ausgetauscht bzw. deren Sitz verbessert werden, ohne den Messerkopf bzw. den Grundkörper von der Werkzeugmaschine abzunehmen.

Grundsätzlich kann eine Schwingungsanregung des Grundkörpers an sich und/oder des einzelnen Bauteils, wie eines Stabmessers, eines Prüfkörpers oder dergleichen, erfolgen. Nach einer Variante der Erfindung ist vorgesehen, dass die Schwingungsanregung des Bauteils folgende Schritte aufweist: Vorspannen des Bauteils mithilfe eines Kraftelements, das zwischen dem Bauteil und einem Anschlag abgestützt ist; Schwingungsanregung des Bauteils mithilfe eines Schwingungserregers. Insbesondere kann vorgesehen sein, dass die Schwingungsanregung ausschließlich an dem zu überprüfenden Bauteil, wie einem Stabmesser, einem Prüfkörper oder dergleichen, erfolgt. Sofern ein Stabmesser eingespannt ist, kann z.B. eine gezielte Krafteinleitung z.B. am Schaft oder im Bereich des Schneidenprofils des zu prüfenden Stabmessers erfolgen.

Es kann vorgesehen sein, dass die Schwingungsanregung des Bauteils, wie eines Stabmessers, eines Prüfkörper oder dergleichen, relativ zu einer Längsachse einer Messerkopfzentralbohrung in radialer Richtung erfolgt; und/oder die Schwingungsanregung des Bauteils, wie eines Stabmessers, eines Prüfkörpers oder dergleichen, relativ zu einem durch die Kavitäten des Grundkörpers aufgespannten Lochkreis betrachtet in tangentialer Richtung erfolgt. Demnach kann die Richtung einer Krafteinleitung an einem Bauteil, wie einem Stabmesser, einem Prüfkörper oder dergleichen, radial, tangential oder geneigt zur radialen und tangentialen Richtung erfolgen.

Wird z.B. festgestellt, dass ein Werkzeugsystem anfällig für Einspannfehler ist, die durch radiale Anregung detektierbar sind, kann die Prüfung eines solchen Sitzes bzw. einer solchen Spannung auf diese Art der Prüfung mit radialer Anregung beschränkt werden.

Wird alternativ festgestellt, dass ein Werkzeugsystem anfällig für Einspannfehler ist, die durch tangentiale Anregung detektierbar sind, kann die Prüfung eines solchen Sitzes bzw. einer solchen Einspannung auf diese Art der Prüfung mit tangentialer Anregung beschränkt werden.

Wird alternativ festgestellt, dass ein Werkzeugsystem anfällig für Einspannfehler ist, die durch tangentiale und/oder radiale und/oder geneigt zur radialen und tangentialen Richtung erfolgende Anregung detektierbar sind, kann die Prüfung eines solchen Sitzes bzw. einer solchen Einspannung für jeden dieser Last- bzw. Anregungsfälle erfolgen.

So kann das erfindungsgemäße Verfahren bedarfsgerecht an ein jeweiliges Werkzeugsystem angepasst werden, wobei vorliegend mit dem Begriff Werkzeugsystem synonym ein Stabmesserkopf bezeichnet wird.

Nach einer weiteren Ausgestaltung des Verfahrens ist vorgesehen, dass die Messung der Verlagerung und/oder Geschwindigkeit und/oder Beschleunigung des Bauteils, wie eines Stabmessers, eines Prüfkörpers oder dergleichen, optisch erfolgt, insbesondere mithilfe eines Lasers. Auf diese Weise kann eine zuverlässige und präzise Erfassung der Verlagerung und/oder Geschwindigkeit und/oder Beschleunigung des Bauteils infolge der Schwingungsanregung erfolgen.

Grundsätzlich kann vorgesehen sein, dass die Messung der Verlagerung und/oder Geschwindigkeit und/oder Beschleunigung des Bauteils, wie eines Stabmessers, eines Prüfkörpers oder dergleichen, taktil mithilfe eine Weggebers erfolgt oder andere geeignete Sensoren zur Bestimmung des Wegs, der Geschwindigkeit oder der Beschleunigung eines Punkts eines Objekts verwendet werden, die z.B. induktiv arbeiten.

Gemäß einer weiteren Ausgestaltung des Verfahrens ist vorgesehen, dass die Auswertung der Messung folgenden Schritt aufweist: Bestimmen der dynamischen Nachgiebigkeit des Bauteils, wie eines Stabmessers, eines Prüfkörper oder dergleichen, in Form eines Frequenzgangs mit einem Kraftsignal der Schwingungsanregung als Eingangssignal und einer Bauteilbewegung als Ausgangssignal. Auf diese Weise kann insbesondere die Verlagerung des Bauteils infolge der Kraftanregung beschrieben werden. Z.B. kann Anhand des Betrags der Verlagerung bestimmt werden, ob die Einspannung des Bauteils korrekt ist, oder, soweit ein Grenzwert überschritten wird, überprüft werden muss.

Alternativ oder ergänzend kann eine Modalanalyse durchgeführt werden, um anhand der ermittelten Eigenfrequenzen und den dazugehörigen Amplituden eine unzureichende Einspannung zu detektieren. So z.B. kann eine Verschiebung der Eigenfrequenzen ein Hinweis auf eine unzureichende Einspannung sein oder für eine bestimmte Frequenz eine ungewöhnlich starke Auslenkung, Geschwindigkeit oder Beschleunigung detektiert werden.

Es kann demnach vorgesehen sein, dass die Auswertung der Messung folgende Schritte aufweist: Vergleich eines oder mehrerer Messwerte der Messung mit einem Referenzwert und/oder Berechnung einer Kennzahl aus Messwerten der Messung und Vergleich mit einer Referenzkennzahl.

Nach einer weiteren Ausgestaltung des Verfahrens ist vorgesehen, dass vor der Auswertung zum Bestimmen des Referenzwerts und/oder der Referenzkennzahl eine oder mehrere Referenzmessungen erfolgen, wobei ein Prüfkörper oder ein Prüfstabmesser in einer Referenzkavität eines weiteren baugleichen Stabmesserkopfs gemessen werden. Demnach kann ein System, das einen möglichst idealen Einspannzustand eines Bauteils, wie eines Stabmessers, eines Prüfkörpers oder dergleichen, in einem Messerschacht repräsentiert, verwendet werden, um eine Referenz als Vergleichsgröße für den zu prüfenden Stabmesserkopf bzw. dessen Grundkörper zu bilden. Die Referenz kann hinsichtlich aller eingangs genannten Einflussgrößen auf den Sitz eines Bauteils, wie eines Stabmessers, eines Prüfkörpers oder dergleichen, im Grundkörper optimiert worden sein, um einen möglichst optimalen Einspannzustand zu erreichen. Anschließend kann eine maximal zulässige Abweichung der Verlagerung und/oder Geschwindigkeit und/oder Beschleunigung von dieser Referenz definiert werden, um die Einspannung der Bauteils eines neuen, in der Fertigung einzusetzenden und/oder bereits eingesetzten Stabmesserkopfs zu überprüfen.

Alternativ oder ergänzend kann vorgesehen sein, dass vor der Auswertung zum Bestimmen des Referenzwerts und/oder der Referenzkennzahl eines oder mehrere Stabmesser eines weiteren baugleichen Stabmesserkopfs oder mehrerer weiterer, baugleicher Stabmesserköpfe vermessen werden. Hierbei können insbesondere eine Mehrzahl von Stabmessern eines oder mehrerer baugleicher Stabmesserköpfe im Neuzustand und zu verschiedenen Verschleißzuständen gemessen werden, um Messdaten von Stabmessereinspannungen mit zuverlässigem Einspannungszustand und Stabmessereinspannungen, die um Betrieb zu Problemen geführt haben, zu ermitteln. Es kann vorgesehen sein, dass alle Messdaten in einer Datenbank gesammelt werden, um Kennwerte für unbedenkliche und kritische Einspannungszustände von Stabmessern in den zugeordneten Messerschächten zu ermitteln.

Alternativ oder ergänzend kann vorgesehen sein, dass vor der Auswertung zum Bestimmen des Referenzwerts und/oder der Referenzkennzahl ein Prüfkörper in einem baugleichen Grundkörper eines weiteren Stabmesserkopfs oder in mehreren baugleichen Grundkörpern des Stabmesserkopfs vermessen werden. Hierbei können insbesondere Prüfkörper in baugleichen Grundkörpern im Neuzustand und zu verschiedenen Verschleißzuständen gemessen werden, um Messdaten von Einspannungen mit zuverlässigem Einspannungszustand und Einspannungen, die um Betrieb zu Problemen geführt haben, zu ermitteln. Es kann vorgesehen sein, dass alle Messdaten in einer Datenbank gesammelt werden, um Kennwerte für unbedenkliche und kritische Einspannungszustände zu ermitteln.

Es kann vorgesehen sein, dass die Auswertung der Messung durch einen Datenabgleich mit einer cloudbasierten Datenbank erfolgt. So können eine Vielzahl von Messdaten und Kennzahlen in einfacher Weise gesammelt und zur Verfügung gestellt werden.

Nach einer weiteren Ausgestaltung des Verfahrens ist vorgesehen, dass der bereitgestellte Grundkörper des Stabmesserkopfs in zwei oder mehr Messerschächten oder in allen Messerschächten mit jeweils einem Stabmesser bestückt ist, wobei die Schwingungsanregung, Messung und Auswertung für jedes Stabmesser durchgeführt wird. Folglich kann ein fertig mit Stabmessern bestückter Grundkörper hinsichtlich des korrekten Sitzes jedes einzelnen Stabmessers in dem zugeordneten Messerschacht überprüft werden. Dabei können die einzelnen Messer aufeinanderfolgend oder zwei oder mehr Messer gleichzeitig hinsichtlich ihrer Einspannung innerhalb des jeweiligen Messerschachts überprüft werden.

Wenn vorliegend von einem Messerschacht zur Aufnahme eines Stabmessers gesprochen wird, so kann es sich dabei um ein an dem Grundkörper vorgesehenes Sackloch oder eine an dem Grundkörper vorgesehene Durchgangsöffnung handeln.

Gemäß einem weiteren Aspekt betrifft die Erfindung eine Vorrichtung zur Kontrolle einer Stabmessereinspannung und/oder eines Messerschachts eines Stabmesserkopfs, eingerichtet zur Durchführung des erfindungsgemäßen Verfahrens, mit einer Aufnahme zum Anordnen des Grundkörpers des Stabmesserkopfs, mit einer Einrichtung zur Schwingungsanregung des Bauteils; mit einer Messvorrichtung zur Messung der Verlagerung und/oder Geschwindigkeit und/oder Beschleunigung des Bauteils.

Die Aufnahme zur Anordnung des Grundkörpers des Stabmesserkopfs kann eine horizontal orientierte Planfläche sein. Alternativ kann der Grundkörper des Stabmesserkopfs entsprechend seiner Orientierung innerhalb einer Werkzeugmaschine aufspannt sein, um den Betriebszustand anzunähern. Alternativ kann der Stabmesserkopf bzw. der Grundkörper des Stabmesserkopfs im fertig an einer Werkzeugmaschine aufgenommenem Zustand geprüft werden.

Es kann vorgesehen sein, dass die Einrichtung zur Schwingungsanregung zur Anregung genau eines Bauteils, wie eines Stabmessers, eines Prüfkörpers oder dergleichen, eingerichtet ist. Um das Messverfahren zu beschleunigen, kann vorgesehen sein, dass zwei oder mehr Bauteile, wie Stabmesser, Prüfkörper oder dergleichen, zeitgleich geprüft werden. Insbesondere kann vorgesehen sein, dass diametral angeordnete Bauteile, wie Stabmesser, Prüfkörper oder dergleichen, gleichzeitig hinsichtlich ihres Sitzes bzw. ihrer Einspannung in einem zugordneten Messerschacht überprüft werden. Alternativ kann vorgesehen sein, dass zwei oder mehr Paarungen diametral angeordneter Bauteile, wie Stabmesser, Prüfkörper oder dergleichen, gleichzeitig geprüft werden. Dabei können, je nach Prüfaufbau, ein einzelner, zwei oder mehr Schwingungserreger verwendet werden.

Eine weitere Ausgestaltung der Vorrichtung zeichnet sich dadurch aus, dass die Einrichtung zur Schwingungsanregung einen Anschlag, ein Kraftelement, einen Schwingungserreger, einen Kraftsensor und ein Kontaktelement hat, wobei das Kontaktelement zur Anlage an dem Bauteil, wie einem Stabmesser, einem Prüfkörper oder dergleichen, eingerichtet ist und wobei das Kraftelement, der Schwingungserreger und der Kraftsensor, im fertig montieren Zustand zwischen dem Anschlag und dem Kontaktelement aufgereiht angeordnet sind, insbesondere koaxial angeordnet sind. So kann ein einfacher Prüfaufbau zum Prüfen des Stabmessersitzes und/oder des Messerschachtes angegeben werden.

Der Anschlag kann im fertig montierten Zustand in einer Messerkopfzentralbohrung des Grundkörpers des Stabmesserkopfs aufgenommen sein, um einen definierten, reproduzierbaren Anlagepunkt zum Abstützen des Kraftelements und des Schwingungserregers zu erreichen.

Eine weitere Ausgestaltung der Vorrichtung ist gekennzeichnet durch eine Steuer und- Auswerteeinheit, die zur vollautomatischen Durchführung und Auswertung des erfindungsgemäßen Verfahrens eingerichtet ist. So kann insbesondere vorgesehen sein, dass die Vorrichtung zum vollautomatischen Bestücken des Grundkörpers mit Stabmessern und/oder Prüfkörpern und zum anschließenden vollautomatischen Prüfen des Sitzes bzw. des Einspannungszustands jedes einzelnen Stabmessers und/oder Prüfkörpers eingerichtet ist.

Nachfolgend wird die Erfindung anhand einer Ausführungsbeispiele darstellenden Zeichnung näher beschrieben. Es zeigen jeweils schematisch:
- Fig. 1A: eine erfindungsgemäße Vorrichtung zur Durchführung des erfindungsgemäßen Verfahrens in einem Querschnitt;
- Fig. 1B: die Vorrichtung aus Fig. 1A in einer Draufsicht;
- Fig. 2A: eine weitere erfindungsgemäße Vorrichtung zur Durchführung des erfindungsgemäßen Verfahrens in einem Querschnitt;
- Fig. 2B: die Vorrichtung aus Fig. 2A in einer Draufsicht;

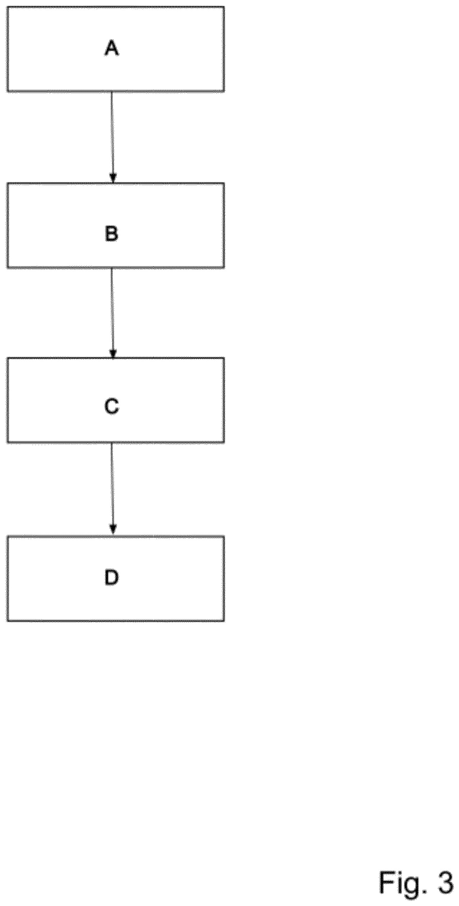

- Fig. 3: ein Ablaufplan eines erfindungsgemäßen Verfahrens.

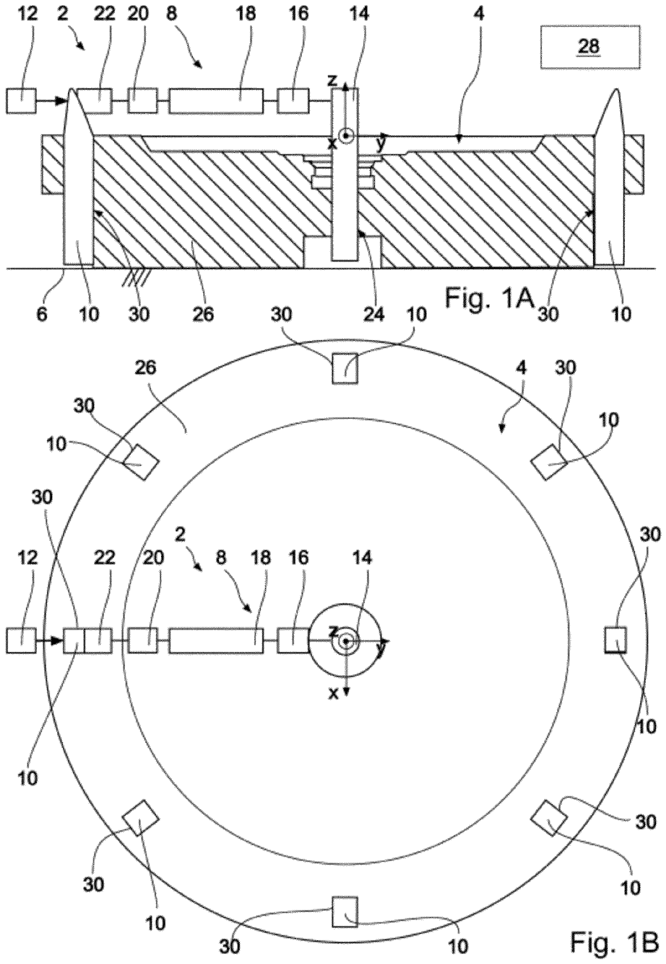

Fig. 1A zeigt eine Vorrichtung 2 zur Kontrolle einer Stabmessereinspannung eines Stabmesserkopfs 4. Die Vorrichtung 2 hat eine Aufnahme 6 zum Anordnen eines Grundkörpers 26 des Stabmesserkopfs 4. Die Aufnahme 6 ist vorliegend als horizontale Planebene 6 gebildet.

Die Vorrichtung 2 hat eine Einrichtung 8 zur Schwingungsanregung eines Bauteils 10, das hier in Form eines Stabmessers 10 gebildet ist. Die Vorrichtung 2 hat eine Messvorrichtung 12 zur Messung der Verlagerung und/oder Geschwindigkeit und/oder Beschleunigung des Stabmessers 10.

Die Einrichtung 8 zur Schwingungsanregung hat einen Anschlag 14, ein Kraftelement 16, einen Schwingungserreger 18, einen Kraftsensor 20 und ein Kontaktelement 22. Das Kontaktelement 22 liegt vorliegend an dem Stabmesser 10 an und ist an das Schneidenprofil des Stabmessers 10 angepasst.

Das Kraftelement 16, der Schwingungserreger 18 sowie der Kraftsensor 20 sind im gemäß Fig. 1A gezeigten, fertig montierten Zustand zwischen dem Anschlag 14 und dem Kontaktelement 22 aufgereiht, koaxial angeordnet. Der Stabmesserkopf 4 hat Messerschächte 30, in denen die Stabmesser 10 lösbar und austauschbar an dem Grundkörper 26 verspannt sind.

Die vorliegend beschriebenen Figuren sind als Schemaskizzen zu verstehen. Es kann vorgesehen sein, dass die Stabmesser 10 und die Messerschächte 30 abweichend zu der Schemaskizze in bekannter Weise räumlich geneigt oder verdreht angeordnet sind. Hierbei ist das Kontaktelement zur Anlage an dem zu untersuchenden Stabmesser angepasst.

Der Anschlag 14 ist in einer Messerkopf-Zentralbohrung 24 eines Grundkörpers 26 des Stabmesserkopfs 4 aufgenommen. Die Vorrichtung 2 hat weiter eine Steuer- und Auswerteeinheit 28, die zur vollautomatischen Durchführung und Auswertung des nachstehend beschriebenen Verfahrens eingerichtet ist.

Die Steuer- und Auswerteeinheit 28 ist vorliegend drahtlos mit der Messvorrichtung 12, dem Kraftelement 16, dem Schwingungserreger 18 und dem Kraftsensor 20 verbunden. Gemäß alternativer Ausführungsbeispiele kann vorgesehen sein, dass die Steuer- und Auswerteeinheit 28 mit einem oder mehreren der vorgenannten Elemente kabelgebunden verbunden ist.

Nachfolgend wird das erfindungsgemäße Verfahren anhand der Figuren 1A und 1B exemplarisch näher beschrieben.

In einem Verfahrensschritte A wird zunächst ein Stabmesserkopf 4 bereitgestellt und mit seinem Grundkörper 26 auf die horizontalen Planebene 6 aufgelegt. Der Stabmesserkopf 4 ist zur spanabhebenden Werkstückbearbeitung zur Herstellung eines Kegelrads eingerichtet, wobei die Stabmesser 10 zum Herstellen der Zahnlücken eines zu fertigenden Kegelrads ausgebildet sind. Die Stabmesser 10 sind lösbar und austauschbar an dem Grundkörper 26 gehalten.

In einem Verfahrensschritt B erfolgt eine Schwingungsanregung des Stabmessers 10 mithilfe der Einrichtung 8 zur Schwingungsanregung.

Währenddessen wird in einem Verfahrensschritt C die Verlagerung und/oder die Geschwindigkeit und/oder die Beschleunigung des Stabmessers 10 mithilfe der Messvorrichtung 12 erfasst.

Mittels der Auswerteeinrichtung 28 erfolgt anschließend die Auswertung der Messung in einem Verfahrensschritt D, um die Qualität der Stabmessereinspannung des zu prüfenden Stabmessers 10 zu bewerten.

Die Schwingungsanregung des Stabmessers 10 im Verfahrensschritt B weist folgende Verfahrensschritte auf: Vorspannen des Stabmessers 10 mithilfe des Kraftelements 16, das zwischen dem Stabmesser 10 und dem Anschlag 14 abgestützt ist; Schwingungsanregung des Stabmessers 10 mithilfe des Schwingungserregers 18.

Die Schwingungsanregung des Stabmessers 10 erfolgt relativ zu einer entlang der z-Achse orientierten Längsachse der Messerkopfzentralbohrung 24 betrachtet in radialer Richtung und damit parallel zur y-Achse.

Gemäß alternativer Ausgestaltungen kann vorgesehen sein, dass die Schwingungsanregung des Stabmessers 10 relativ zu einem durch die Kavitäten 28 des Grundkörpers 26 aufgespannten Lochkreis betrachtet in tangentialer Richtung, also an dem Stabmesser 10 angreifend parallel zur x-Achse erfolgt.

Vorliegend erfolgt die Messung der Verlagerung und/oder der Geschwindigkeit und/oder der Beschleunigung des Stabmessers 10 optisch mithilfe eines Lasers 12.

Die Auswertung der Messung im Verfahrensschritt D umfasst den Schritt: Bestimmen der dynamischen Nachgiebigkeit des Stabmessers 10 in Form eines Frequenzgangs, mit einem mithilfe des Kraftsensors 20 gemessenen Kraftsignal der Schwingungsanregung als Eingangsgröße und der mithilfe des Lasers 12 erfassten Messerbewegung als Ausgangsgröße.

Vorliegend wird z.B. überprüft, ob die maximale Auslenkung des Stabmessers parallel zur y-Richtung einen vorgegebenen Grenzwert überschreitet, wobei im Falle einer Überschreitung des Grenzwerts der Stabmessersitz überprüft werden muss, und im Falle einer Unterschreitung des Grenzwerts der Stabmessersitz bzw. die Einspannung des Stabmessers 10 im Grundkörper 26 für gut befunden wird.

Der Stabmesserkopf 4 ist vorliegend in jeder der Kavitäten 28 mit jeweils einem Stabmesser 10 bestückt, wobei die Schwingungsanregung, Messung und Auswertung entsprechend der Verfahrensschritte B, C und D nacheinander aufeinanderfolgend für jedes Stabmesser 10 durchgeführt wird.

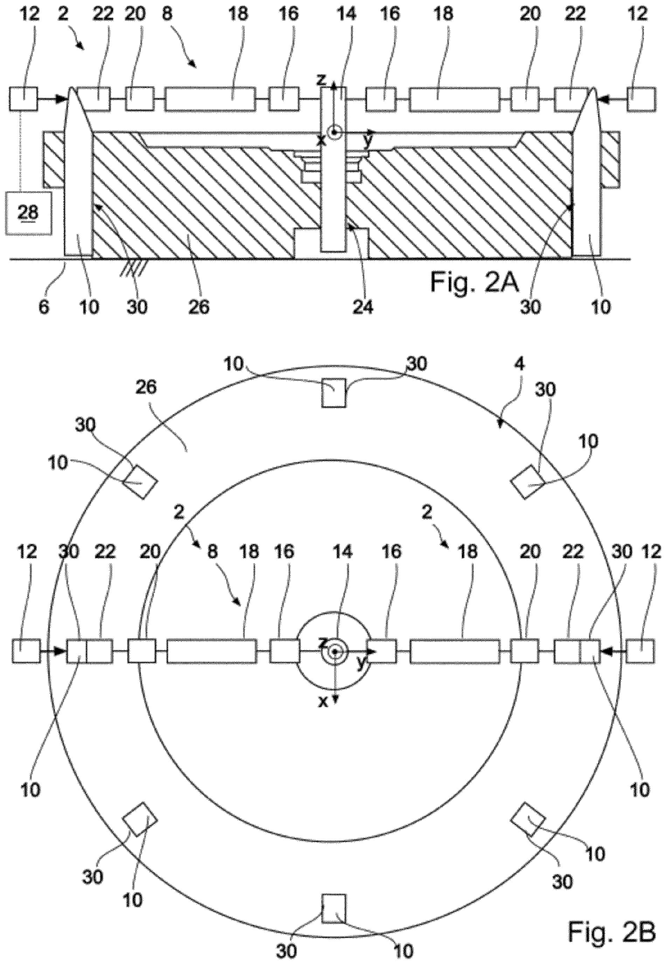

Um das Messverfahren zu beschleunigen ist gemäß der Figuren 2A und 2B eine Variante der erfindungsgemäßen Vorrichtung gezeigt, bei der diametral gegenüberliegende Stabmesser 10 jeweils mit einem separaten Prüfaufbau gekoppelt und hinsichtlich ihrer Einspannung an dem Grundkörper 6 simultan überprüft werden können.

### Bezugszeichen

- 2: Vorrichtung
- 4: Stabmesserkopf
- 6: Aufnahme
- 8: Einrichtung zur Schwingungsanregung
- 10: Stabmesser
- 12: Messeinrichtung
- 14: Anschlag
- 16: Kraftelement
- 18: Schwingungserreger
- 20: Kraftsensor
- 22: Kontaktelement
- 24: Messerkopf-Zentralbohrung
- 26: Grundkörper
- 28: Steuer- und Auswerteeinrichtung
- 30: Messerschacht
- A: Verfahrensschritt
- B: Verfahrensschritt
- C: Verfahrensschritt
- D: Verfahrensschritt

## Patentansprüche

1. Verfahren zur Kontrolle einer Stabmessereinspannung und/oder eines Messerschachts eines Stabmesserkopfs zur Kegelradherstellung, mit den Verfahrensschritten :
- Bereitstellen eines Grundkörpers (26) eines Stabmesserkopfs (4),
- wobei der Grundkörper (26) Messerschächte (30) zur Aufnahme von Stabmessern (10) aufweist, und
- wobei in mindestens einem Messerschacht (30) des Grundkörpers (26) des Stabmesserkopfs (4) ein Bauteil (10), wie ein Stabmesser (10), ein Prüfkörper oder dergleichen, lösbar und austauschbar eingespannt ist;
- Schwingungsanregung des Bauteils (10);
- Messung der Verlagerung und/oder Geschwindigkeit und/oder Beschleunigung des Bauteils (10);
- Auswertung der Messung.

2. Verfahren nach Anspruch 1,
**dadurch gekennzeichnet, dass**
- das Bereitstellen des Grundkörpers (26) folgenden Schritt aufweist:
- Auflegen des Grundkörpers (26) des Stabmesserkopfs (4) auf eine horizontal orientierte Planebene (6).

3. Verfahren nach Anspruch 1 oder Anspruch 2,
**dadurch gekennzeichnet, dass**
- die Schwingungsanregung des Bauteils (10) folgende Schritte aufweist:
- Vorspannen des Bauteils (10) mithilfe eines Kraftelements (16), das zwischen dem Bauteil (10) und einem Anschlag (14) abgestützt ist;
- Schwingungsanregung des Bauteils (10) mithilfe eines Schwingungserregers (18).

4. Verfahren nach einem der Ansprüche 1 bis 3,
**dadurch gekennzeichnet, dass**
- die Schwingungsanregung des Bauteils (10) relativ zu einer Längsachse einer Messerkopfzentralbohrung (24) in radialer Richtung erfolgt;
und/oder
- die Schwingungsanregung des Bauteils (10) relativ zu einem durch die Messerschächte (30) des Grundkörpers (26) aufgespannten Lochkreis betrachtet in tangentialer Richtung erfolgt.

5. Verfahren nach einem der Ansprüche 1 bis 4,
**dadurch gekennzeichnet, dass**
- die Messung der Verlagerung und/oder Geschwindigkeit und/oder Beschleunigung des Bauteils (10) optisch erfolgt.

6. Verfahren nach einem der Ansprüche 1 bis 5,
**dadurch gekennzeichnet, dass**
- die Auswertung der Messung folgenden Schritt aufweist:
- Bestimmen der dynamischen Nachgiebigkeit des Bauteils (10) in Form eines Frequenzgangs, mit einem Kraftsignal der Schwingungsanregung als Eingangssignal und einer Bauteilbewegung als Ausgangssignal.

7. Verfahren nach einem der Ansprüche 1 bis 6,
**dadurch gekennzeichnet, dass**
- die Auswertung der Messung folgende Schritte aufweist:
- Vergleich eines oder mehrerer Messwerte der Messung mit einem Referenzwert
und/oder
- Berechnung einer Kennzahl aus Messwerten der Messung und Vergleich mit einer Referenzkennzahl.

8. Verfahren nach Anspruch 7,
**dadurch gekennzeichnet, dass**
- vor der Auswertung zum Bestimmen des Referenzwerts und/oder der Referenzkennzahl eine oder mehrere Referenzmessungen erfolgen, wobei ein Prüfkörper oder ein Prüfstabmesser in einer Referenzkavität eines weiteren baugleichen Stabmesserkopfs gemessen werden;
und/oder
- vor der Auswertung zum Bestimmen des Referenzwerts und/oder der Referenzkennzahl eines oder mehrere Stabmesser eines weiteren baugleichen Stabmesserkopfs oder mehrerer weiterer baugleicher Stabmesserköpfe vermessen werden.

9. Verfahren nach einem der Ansprüche 1 bis 8,
**dadurch gekennzeichnet, dass**
- die Auswertung der Messung durch einen Datenabgleich mit einer cloudbasierten Datenbank (28) erfolgt.

10. Verfahren nach einem der Ansprüche 1 bis 9,
**dadurch gekennzeichnet, dass**
- der bereitgestellte Grundkörper (26) des Stabmesserkopf (4) in zwei oder mehr Messerschächten (30) oder in allen Messerschächten (30) mit jeweils einem Stabmesser (10) bestückt ist,
- wobei die Schwingungsanregung, Messung und Auswertung für jedes Stabmesser (10) durchgeführt wird.

11. Vorrichtung zur Kontrolle einer Stabmessereinspannung und/oder eines Messerschachts eines Stabmesserkopfs,
- eingerichtet zur Durchführung des Verfahrens nach einem der Ansprüche 1 bis 10,
- mit einer Aufnahme (6) zum Anordnen des Grundkörpers (26) des Stabmesserkopfs (4),
- mit einer Einrichtung (8) zur Schwingungsanregung des Bauteils (10);
- mit einer Messvorrichtung (12) zur Messung der Verlagerung und/oder Geschwindigkeit und/oder Beschleunigung des Bauteils (10).

12. Vorrichtung nach Anspruch 11,
**dadurch gekennzeichnet, dass**
- die Einrichtung (8) zur Schwingungsanregung einen Anschlag (14), ein Kraftelement (16), einen Schwingungserreger (18), einen Kraftsensor (20) und ein Kontaktelement (22) hat,
- wobei das Kontaktelement (22) zur Anlage an dem Bauteil (10) eingerichtet ist und
- wobei das Kraftelement (16), der Schwingungserreger (18) und der Kraftsensor (20), im fertig montieren Zustand zwischen dem Anschlag (14) und dem Kontaktelement (22) aufgereiht angeordnet sind, insbesondere koaxial angeordnet sind.

13. Vorrichtung nach Anspruch 12,
**dadurch gekennzeichnet, dass**
- der Anschlag (14) im fertig montierten Zustand in einer Messerkopfzentralbohrung (24) des Grundkörpers (26) des Stabmesserkopfs (4) aufgenommen ist.

14. Vorrichtung nach einem der Ansprüche 11 bis 13,
**gekennzeichnet durch**
- eine Steuer und- Auswerteeinheit (28), die zur vollautomatischen Durchführung und Auswertung des Verfahrens nach einem der Ansprüche 1 bis 10 eingerichtet ist.

## Claims

1. A method for checking a bar blade chucking and/or a blade slot of a bar blade cutter head for bevel gear production, having the following method steps:
- providing a main body (26) of a bar blade cutter head (4),
- wherein the main body (26) comprises blade slots (30) for accommodating bar blades (10), and
- wherein a component (10), such as a bar blade (10), a test specimen, or the like, is chucked in a detachable and replaceable manner in at least one blade slot (30) of the main body (26) of the bar blade cutter head (4);
- exciting oscillations of the component (10);
- measuring the displacement and/or velocity and/or acceleration of the component (10);
- analyzing the measurement.

2. The method according to claim 1,
**characterized in that**
- the provision of the main body (26) comprises the following step:
- laying the main body (26) of the bar blade cutter head (4) on a horizontally oriented planar plane (6).

3. The method according to claim 1 or claim 2,
**characterized in that**
- the oscillation excitation of the component (10) comprises the following steps:
- pre-clamping the component (10) with the aid of a force element (16), which is supported between the component (10) and a stop (14);
- exciting oscillations of the component (10) with the aid of an oscillation exciter (18).

4. The method according to any one of claims 1 to 3,
**characterized in that**
- the oscillation excitation of the component (10) takes place in the radial direction in relation to a longitudinal axis of a cutter head central bore (24);
and/or
- the oscillation excitation of the component (10) takes place in the tangential direction viewed in relation to a hole circle spanned by the blade slots (30) of the main body (26).

5. The method according to any one of claims 1 to 4,
**characterized in that**
- the measurement of the displacement and/or velocity and/or acceleration of the component (10) is performed optically.

6. The method according to any one of claims 1 to 5,
**characterized in that**
- the analysis of the measurement comprises the following step:
- determining the dynamic resilience of the component (10) in the form of a frequency response, having a force signal of the oscillation excitation as an input signal and a component movement as an output signal.

7. The method according to any one of claims 1 to 6,
**characterized in that**
- the analysis of the measurement comprises the following steps:
- comparing one or more measured values of the measurement to a reference value
and/or
- computing a parameter from measured values of the measurement and comparing it to a reference parameter.

8. The method according to claim 7,
**characterized in that**
- before the analysis for determining the reference value and/or the reference parameter, one or more reference measurements are performed, wherein a test specimen or a test bar blade is measured in a reference cavity of a further structurally-equivalent bar blade cutter head;
and/or
- before the analysis for determining the reference value and/or the reference parameter, one or more bar blades of a further structurally-equivalent bar blade cutter head or multiple further structurally-equivalent bar blade cutter heads are measured.

9. The method according to any one of claims 1 to 8,
**characterized in that**
- the analysis of the measurement is performed by a data comparison to a cloud-based database (28).

10. The method according to any one of claims 1 to 9,
**characterized in that**
- the provided main body (26) of the bar blade cutter head (4) is equipped in two or more blade slots (30) or in all blade slots (30) with one bar blade (10) in each case,
- wherein the oscillation excitation, measurement, and analysis are carried out for each bar blade (10).

11. An apparatus for checking a bar blade chucking and/or a blade slot of a bar blade cutter head,
- configured for carrying out the method according to any one of Claims 1 to 10,
- having a receptacle (6) for arranging the main body (26) of the bar blade cutter head (4),
- having a unit (8) for oscillation excitation of the component (10);
- having a measuring device (12) for measuring the displacement and/or velocity and/or acceleration of the component (10).

12. The apparatus according to claim 11,
**characterized in that**
- the unit (8) for oscillation excitation has a stop (14), a force element (16), an oscillation exciter (18), a force sensor (20), and a contact element (22),
- wherein the contact element (22) is configured for contact on the component (10), and
- wherein the force element (16), the oscillation exciter (18), and the force sensor (20) are arranged in a row, in particular are arranged coaxially, between the stop (14) and the contact element (22) in the finished installed state.

13. The apparatus according to claim 12,
**characterized in that**
- the stop (14) is accommodated in a cutter head central bore (24) of the main body (26) of the bar blade cutter head (4) in the finished installed state.

14. The apparatus according to any one of claims 11 to 13,
**characterized by**
- a control and analysis unit (28), which is configured for the fully automatic performance and analysis of the method according to any one of Claims 1 to 10.

## Revendications

1. Procédé pour contrôler la fixation d'une lame de coupe en forme de barre et/ou un logement d'une tête de lame de coupe pour la fabrication d'engrenages coniques, comprenant les étapes de procédé suivantes :
- fournir un corps de base (26) d'une tête de lame de coupe (4),
• le corps de base (26) présentant des logements de lame (30) pour recevoir les lames de coupe (10), et
• dans au moins un logement de lame (30) du corps de base (26) de la tête de lame de coupe (4), un élément (10), comme une lame de coupe (10), un échantillon ou analogue, étant monté de façon amovible et interchangeable ;
- faire vibrer l'élément (10) ;
- mesurer le déplacement et/ou la vitesse et/ou l'accélération de l'élément (10) ;
- analyser la mesure.

2. Procédé selon la revendication 1, **caractérisé en ce que**
- la fourniture du corps de base (26) comprend l'étape suivante :
- poser le corps de base (26) de la tête de lame de coupe (4) sur une surface plane (6) orientée horizontalement.

3. Procédé selon la revendication 1 ou 2, **caractérisé en ce que**
- l'excitation par vibrations de l'élément (10) comprend les étapes suivantes :
- fixer l'élément (10) à l'aide d'un élément de force (16) qui est soutenu entre l'élément (10) et une butée (14) ;
- faire vibrer l'élément (10) à l'aide d'un générateur de vibrations (18).

4. Procédé selon l'une des revendications 1 à 3, **caractérisé en ce que**
- l'excitation par vibrations de l'élément (10) se fait dans le sens radial par rapport à un axe longitudinal d'un alésage central de la tête de lame de coupe (24) ; et/ou
- l'excitation par vibrations de l'élément (10) se fait dans le sens tangentiel par rapport à un cercle de perçage fixé à travers les logements de lame (30) du corps de base (26).

5. Procédé selon l'une des revendications 1 à 4, **caractérisé en ce que**
- la mesure du déplacement et/ou de la vitesse et/ou de l'accélération de l'élément (10) se fait visuellement.

6. Procédé selon l'une des revendications 1 à 5, **caractérisé en ce que**
- l'analyse de la mesure comprend l'étape suivante :
- déterminer la résilience dynamique de l'élément (10) sous la forme d'une réponse en fréquence, avec un signal de force de l'excitation par vibrations comme signal d'entrée et un mouvement de l'élément comme signal de sortie.

7. Procédé selon l'une des revendications 1 à 6, **caractérisé en ce que**
- l'analyse de la mesure comprend les étapes suivantes :
• comparer une ou plusieurs valeurs de mesure de la mesure avec une valeur de référence ; et/ou
• calculer un indicateur à partir des valeurs de mesure de la mesure et le comparer à un indicateur de référence.

8. Procédé selon la revendication 7, **caractérisé en ce que**
- avant l'analyse en vue de la détermination de la valeur de référence et/ou de l'indicateur de référence, il est effectué une ou plusieurs mesures de référence, un échantillon ou une lame de coupe d'essai étant mesuré(e) dans une cavité de référence d'une autre tête de lame de coupe de construction identique ; et/ou
- avant l'analyse en vue de la détermination de la valeur de référence et/ou de l'indicateur de référence il est mesuré une ou plusieurs lames de coupe d'une ou de plusieurs autres têtes de lame de coupe de construction identique.

9. Procédé selon l'une des revendications 1 à 8, **caractérisé en ce que**
- l'analyse de la mesure se fait par un rapprochement avec une base de données (28) basée sur le cloud.

10. Procédé selon l'une des revendications 1 à 9, **caractérisé en ce que**
- le corps de base fourni (26) de la tête de lame de coupe (4) est muni dans deux logements de lame ou plus (30) ou dans tous les logements de lame (30) d'une lame de coupe (10),
- l'excitation par vibrations, la mesure et l'analyse étant effectuées pour chaque lame de coupe (10).

11. Dispositif pour contrôler la fixation de lame de coupe et/ou un logement de lame d'une tête de lame de coupe,
- configuré pour réaliser le procédé selon l'une des revendications 1 à 10,
- comprenant un logement (6) pour recevoir le corps de base (26) de la tête de lame de coupe (4),
- comprenant une installation (8) pour faire vibrer l'élément (10) ;
- comprenant un dispositif de mesure (12) pour mesurer le déplacement et/ou la vitesse et/ou l'accélération de l'élément (10).

12. Dispositif selon la revendication 11, **caractérisé en ce que**
- l'installation (8) pour l'excitation par vibrations possède une butée (14), un élément de force (16), un générateur de vibrations (18), un capteur de force (20) et un élément de contact (22) ;
- l'élément de contact (22) est conçu pour venir contre l'élément (10) ; et
- l'élément de force (16), le générateur de vibrations (18) et le capteur de force (20), à l'état monté, sont agencés alignés entre la butée (14) et l'élément de contact (22), et sont agencés en particulier de façon coaxiale.

13. Dispositif selon la revendication 12, **caractérisé en ce que**
- la butée (14), à l'état monté, est logée dans un alésage central de tête de lame de coupe (24) du corps de base (26) de la tête de lame de coupe (4).

14. Dispositif selon l'une des revendications 11 à 13, **caractérisé en ce que**
- il est installé une unité de commande et d'analyse (28) pour la réalisation et l'évaluation totalement automatisées du procédé selon l'une des revendications 1 à 10.
